# EUROPEAN PATENT APPLICATION

(11) **EP 2 602 175 A1**
(43) Date of publication of application: **12.06.2013**
(21) Application number: 12195334.3
(22) Date of filing: 03.12.2012
(51) Int. Cl.: B62H 1/02, B62H 1/06

(54) **Kickstand with adjustable length**

(30) Priority: 06.12.2011 IT PD20110384
(71) Applicant: Ursus S.P.A., 36027 Rosa' VI (IT)
(72) Inventor: Ferronato, Sergio, 36027 Rosa' VI (IT)
(74) Representative: Modiano, Micaela Nadia

(57) **Abstract**

A kickstand with adjustable length (10), comprising a bracket (11) for fixing to the lower part of a frame of a bicycle, a telescopic leg (12) being articulated to the bracket (11); the telescopic leg (12) comprises a first element (14), which is articulated to the bracket (11), and a second element (15), which can be extracted telescopically with respect to the first element (14) and is provided with a resting foot (13); reversible means are present for locking the position of the second element with respect to the first element (14).

The reversible locking means comprise, on the first element (14), at least one first through hole, which is adapted to be arranged at any one of second through holes (17, 17a, 17b, 17c, 17d, 17e) which are provided so that they are equidistant, laterally adjacent and aligned on the second extractable element (15), a first hole (16) and a corresponding second hole (17a), which are superimposed, being adapted to be crossed by a corresponding locking insert (18), for preventing mutual translation between the first element and the second element; the locking insert (18) extending from a plate (19) for anchoring to the second element (15).

## Description

The present invention relates to a kickstand with adjustable length.

Nowadays telescopic kickstands are known which are constituted by a bracket for fixing to the lower part of a frame of a bicycle, of the type of a city bike, mountain bike, and the like, the bracket being articulated to a telescopic leg with a foot for resting on the ground.

The leg is constituted by a first tubular element, which is pivoted to the bracket, and a second tubular element, which is provided with the resting foot, with the first tubular element partially inserted in the second tubular element and extractable therefrom and insertable therein in order to extend or retract, selectively, the telescopic leg.

Such a telescopic kickstand has reversible means for locking the position of the second tubular element with respect to the first.

Such locking means are generally comprised of a screw which is arranged to cross a point of the wall of the second tubular element, in a substantially radial direction, in order to be pressed against the first tubular element underneath to retain it in a preset position.

Such telescopic kickstands, although appreciated and widespread, show some room for improvement.

In particular, adjustment of the length requires the use of special tools, such as a screwdriver, a spanner or an Allen key, depending on the head of the locking screw, which must be used for a relatively long period for unscrewing of the screw when the user wants to perform a new adjustment of the length of the leg, and subsequently screwing the same screw back in once the new length of the leg is established, operations which are normally performed which require the user to adopt a very uncomfortable position, crouched on the ground or bent double.

Moreover such locking system, based on the compression of the screw against the outer surface of the first element which is inserted in the second element of the leg, may not always be effective, for example due to the constant stresses to which the kickstand is subjected in the normal use of the bicycle, which can determine a loosening of the screw, and a consequent risk of functional failure of the kickstand in use, since the latter can suddenly be shortened due to the weight of the bicycle with consequent overturning thereof and with all the dangers that such an event can involve.

The aim of the present invention is to provide a kickstand with adjustable length which is capable of overcoming the above-.mentioned drawbacks of conventional kickstands.

Within this aim, an object of the invention is to provide a kickstand the length of which is simpler and quicker to adjust than that of conventional kickstands.

Another object of the invention is to provide a kickstand the length adjustment of which is stable and safe.

A further object of the invention is to provide a kickstand the length of which is adjustable in an intuitive manner without particular advance training.

Another object of the invention is to provide a kickstand with adjustable length that can be produced using known systems and technologies.

This aim and these and other objects which will become more evident hereinafter are achieved by a kickstand with adjustable length, of the type comprising a bracket for fixing to the lower part of a frame of a bicycle, a telescopic leg with a foot for resting on the ground being articulated to said bracket, said telescopic leg comprising a first element which is articulated to said bracket and a second element which can be extracted telescopically with respect to said first element and is provided with said resting foot, reversible means for locking the position of the second element with respect to the first element being provided, said kickstand being **characterized in that** said reversible locking means comprise, on the first element, at least one first through hole, which is adapted to be arranged at any one of second through holes which are provided so that they are equidistant, laterally adjacent and aligned on said second extractable element, a first hole and a corresponding second hole which are superimposed being adapted to be crossed by a corresponding locking insert for preventing mutual translation between said first element and said second element, said locking insert extending from a plate for anchoring to said second element.

Further characteristics and advantages of the invention will become more apparent from the description of a preferred, but not exclusive, embodiment of the kickstand according to the invention, which is illustrated by way of non-limiting example in the accompanying drawings wherein:

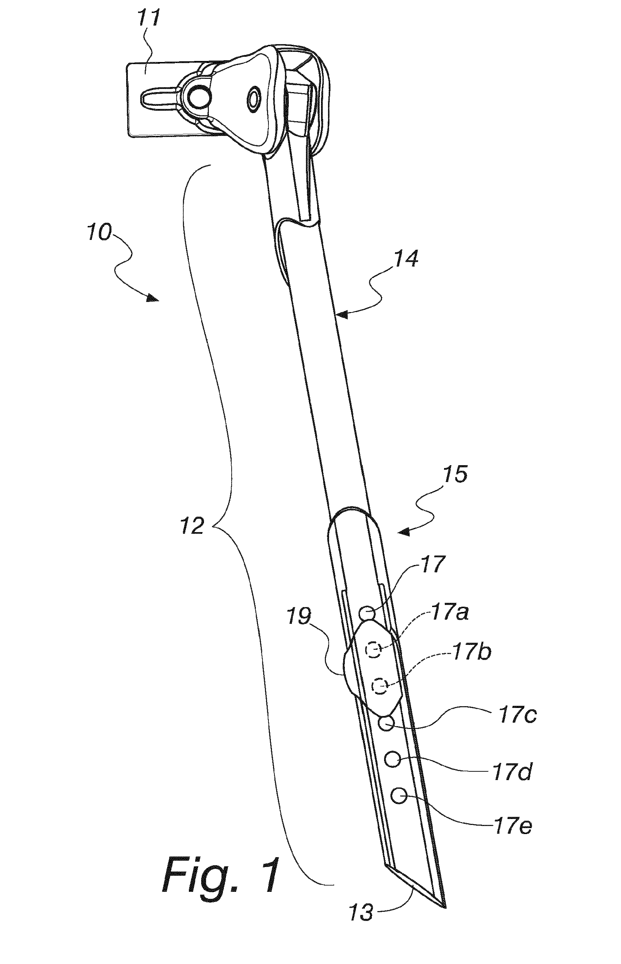

Figure 1 is a view from below of a kickstand according to the invention;
Figure 2 is a sectional side view of a kickstand according to the invention in a first configuration of use;
Figure 3 is the same side view as in Figure 2 with the kickstand according to the invention in an intermediate configuration of variation of its length;
Figure 4 is the same side view as in Figures 2 and 3 with the kickstand according to the invention in a second configuration of use;
Figure 5 is an exploded transverse cross-section of a kickstand according to the invention in a first embodiment thereof as in the previous figures;
Figure 6 is the same sectional view as in Figure 5, assembled;
Figure 7 is an exploded transverse cross-section of a kickstand according to the invention in a second embodiment thereof;
Figure 8 is the same sectional view as in Figure 7, assembled.

With reference to the figures, a kickstand with adjustable length according to the invention is generally designated with the reference numeral 10.

The kickstand 10 comprises a bracket 11 for fixing to the lower part of a frame of a bicycle, the latter not shown for simplicity and understood to be of the conventional type.

The bracket 11 is articulated to a telescopic leg 12 with a foot 13 for resting on the ground.

The telescopic leg 12 comprises a first element 14 which is articulated to the bracket 11, and a second element 15, which can be extracted telescopically with respect to the first element 14 and is provided with the resting foot 13.

By way of example, the first element 14 is constituted by a tube made of metallic material, whereas the second element 15 is an additional tubular element made of plastic material, which incorporates the foot 13 at one end. The kickstand 10 has reversible means for locking the position of the second element 15 with respect to the first element 14.

The reversible locking means comprise, on the first element 14, two first through holes 16 and 16a, which are adapted to be positioned at any two of second through holes 17, 17a, 17b, 17c, 17d, 17e, which are provided so that they are equidistant, laterally adjacent and aligned on the second extractable element 15.

The first holes 16 and 16a and two corresponding second holes of the second through holes 17, 17a, 17b, 17c, 17d and 17e, which are superimposed, are adapted to be crossed by corresponding locking inserts 18 and 18a, for preventing mutual translation between said first element and said second element.

The locking inserts 18 and 18a extend from a plate 19 for anchoring to the second element 15.

On the first element 14 two first through holes 16 and 16a are thus formed, and are spaced like two consecutive first holes, for example 17a and 17b, and are adapted to be positioned at any two of the second through holes 17, 17a, 17b, 17c, 17d, 17e.

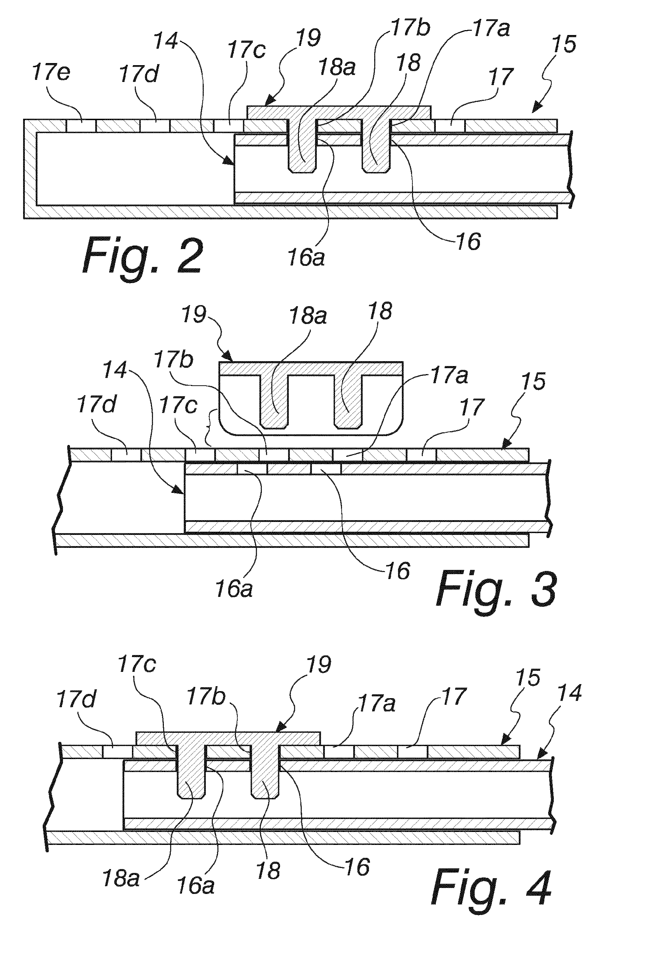

The two pre-selected second holes, for example 17a and 17b in Figure 2, and the corresponding first holes 16 and 16a are positioned so as to be coaxial with the first holes, and are adapted, as has been said, to be crossed by respective locking inserts 18 and 18a.

In such embodiment, which is a non-limiting example of the invention, the anchoring plate 19 and the inserts 18 and 18a are made monolithically, for example of plastic material.

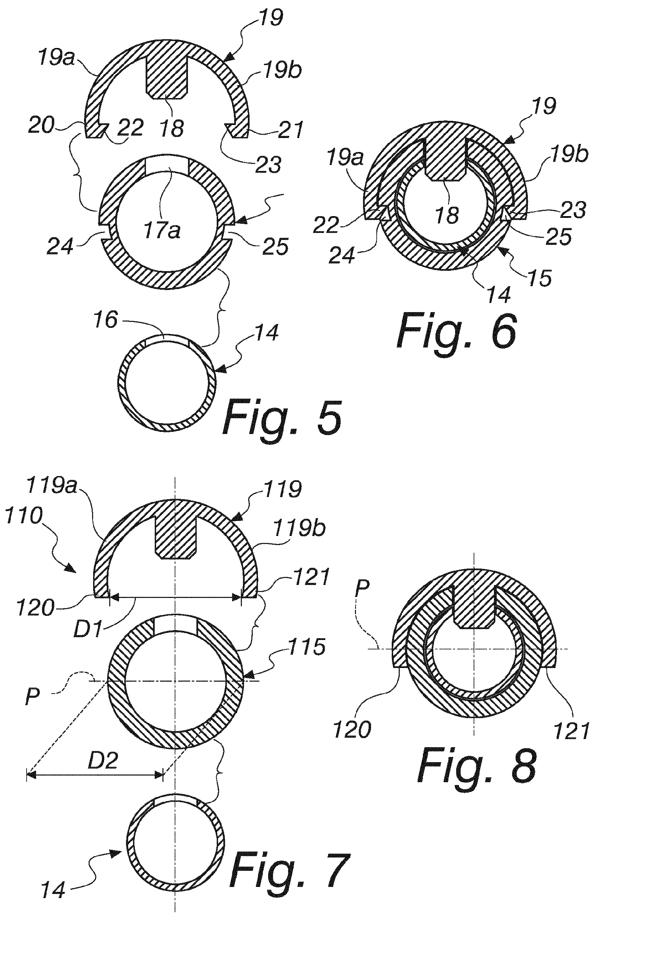

The anchoring plate 19 has an arc-shaped transverse cross-section, with the lateral portions 19a and 19b contoured so as to surround partially a corresponding portion of the cross-section of the second element 15, as in Figures 5 and 6.

The opposite lateral edges 20 and 21 have a corresponding number of engagement teeth 22 and 23, which protrude inward and are adapted to engage detachably by snap action in corresponding slots 24 and 25 which are formed in an axial direction on the outer surface of the second element 15.

In a second embodiment of the kickstand according to the invention, which is generally designated with the reference numeral 110 in Figure 7, the anchoring plate 119 has lateral portions 119a and 119b which are extended so as to surround the second element 115 so that the lateral edges 120 and 121 are mutually spaced by a distance D1 which is shorter than the outer diameter D2 of the second element 115, and are arranged below the median plane P of the second element 115 thus making the coupling of the anchoring plate 119 with the same second element 115 stable, as in Figure 8.

Operation of the kickstand according to the invention is as follows.

In order to modify the length of the leg 12 the user operates, for example with a screwdriver, to remove the plate 19 from its configuration anchored to the second element 15, by lifting an edge thereof in order to achieve for example the exit of the engagement teeth 22 and 23 from the respective slots 24 and 25; the removal of the anchoring plate 19 naturally involves the extraction of the inserts 18 and 18a from the first holes 16 and 16a of the first element 14 and from the corresponding second holes 17a and 17b of the second element 15.

The removal of the plate 19 with the inserts 18 and 18a releases the relative translational motion of the second element 15 with respect to the first element 14, as in Figure 3.

The second element 15 is moved by arranging the first holes 16 and 16a at a pair of second holes, for example 17b and 17c, other than the pair of second holes 17a and 17b which were previously affected by the inserts 18 and 18a.

At this point, with a single movement of the plate 19 the two inserts 18 and 18a are inserted into the selected pairs of holes and the mutual locking of the first element 14 and of the second element 15 is determined in the new selected mutual configuration, which defines a different length of the leg 12 than before.

In practice it has been found that the invention fully achieves the intended aim and objects.

In particular, with the invention a kickstand has been provided the length of which is simpler and faster to adjust than conventional kickstands, since there is no screw which must be unscrewed and then screwed back in.

Moreover, with the invention a kickstand has been provided the length adjustment of which is stable and safe, the locking being achieved by one or more inserts which are transverse with respect to the direction of extension and retraction of the leg, so that an unwanted mutual translational motion is not possible under normal conditions of use.

What is more, with the invention a kickstand has been provided the length of which is adjustable in an intuitive manner without particular training in advance.

In addition, with the invention a kickstand with adjustable length has been devised that can be produced using known systems and technologies.

The invention, thus conceived, is susceptible of numerous modifications and variations, all of which are within the scope of the appended claims. Moreover, all the details may be substituted by other, technically equivalent elements.

In practice the materials employed, and the contingent dimensions and shapes, may be any according to requirements and to the state of the art.

The disclosures in Italian Patent Application No. PD2011A000384 from which this application claims priority are incorporated herein by reference.

Where technical features mentioned in any claim are followed by reference signs, such reference signs have been inserted for the sole purpose of increasing the intelligibility of the claims and accordingly such reference signs do not have any limiting effect on the interpretation of each element identified by way of example by such reference signs.

## Claims

1. A kickstand (10) with adjustable length, of the type comprising a bracket (11) for fixing to the lower part of a frame of a bicycle, a telescopic leg (12) with a foot (13) for resting on the ground being articulated to said bracket (11), said telescopic leg (12) comprising a first element (14) which is articulated to said bracket (11) and a second element (15) which can be extracted telescopically with respect to said first element (14) and is provided with said resting foot (13), reversible means for locking the position of the second element (15) with respect to the first element (14) being provided, said kickstand (10) being **characterized in that** said reversible locking means comprise, on the first element (14), at least one first through hole (16), which is adapted to be arranged at any one of second through holes (17, 17a, 17b, 17c, 17d, 17e) which are provided so that they are equidistant, laterally adjacent and aligned on said second extractable element (15), at least one first hole (16) and one corresponding second hole (17a) which are superimposed being adapted to be crossed by a corresponding locking insert (18) for preventing mutual translation between said first element and said second element, said locking insert (18) extending from a plate (19) for anchoring to said second element (15).

2. The kickstand according to claim 1, **characterized in that** two first through holes (16, 16a) are formed in said first element (14), are spaced like two consecutive second holes (17, 17a, 17b, 17c, 17d, 17e) and are adapted to be positioned at any two of said second through holes (17, 17a, 17b, 17c, 17d, 17e).

3. The kickstand according to claim 1, **characterized in that** the anchoring plate (19) and the inserts (18, 18a) are provided monolithically.

4. The kickstand according to one or more of the preceding claims, **characterized in that** said anchoring plate (19) has a transverse cross-section that is contoured so as to surround partially a corresponding portion of the cross-section of the second element (15).

5. The kickstand according to one or more of the preceding claims, **characterized in that** the opposite lateral edges (20, 21) of said anchoring plate (19) have a corresponding number of engagement teeth (22, 23) which protrude inward and are adapted to engage detachably by snap action in corresponding slots (24, 25) which are formed in an axial direction on the outer surface of the second element (15).

6. The kickstand according to one or more of claims 1 to 4, **characterized in that** said anchoring plate (119) is provided with lateral portions (119a, 119b) which are extended so as to surround the second element (115) so that the lateral edges (120, 121) are mutually spaced by a distance (D1) which is shorter than the outer diameter (D2) of the second element (115).
